# EUROPEAN PATENT SPECIFICATION

(11) **EP 1 625 170 B1**
(45) Date of publication and mention of the grant of the patent: **04.07.2007**
(21) Application number: 04732516.2
(22) Date of filing: 12.05.2004
(51) Int. Cl.: C08F 212/08, C08F 8/30, C08F 8/32

(54) **A METHOD FOR PREPARING STYRENE AND MALEIMIDE COPOLYMER USING SUPER CRITICAL FLUID**
VERFAHREN ZUR HERSTELLUNG VON STYROL-MALEINIMID-COPOLYMEREN UNTER VERWENDUNG EINES ÜBERKRITISCHEN FLUIDS
PROCEDES DE PREPARATION DE COPOLYMERE STYRENE ET MALEIMIDE AU MOYEN D'UN FLUIDE SUPERCRITIQUE

(30) Priority: 16.05.2003 KR 2003031214
(43) Date of publication of application: 15.02.2006
(73) Proprietor: LG Chem, Ltd., Seoul 150-721 (KR)
(72) Inventor: KIM, Dong-Ryul, 109-1102, Luckyhana Apartment, Daejeon 305-721 (KR); PARK, Sang-Hyun, 3-406, LG Chemical Apartment, Daejeon 305-340 (KR); LEE, Hee-Hyun, 108-905, Sejong Apartment, Daejeon 305-728 (KR)
(74) Representative: Bunke, Holger
(86) International application number: PCT/KR2004/001090
(87) International publication number: WO 2004/101636

(56) References cited:
- EP-A- 0 409 115
- EP-A- 0 467 551
- EP-A- 0 924 225
- EP-A- 0 955 316
- EP-A1- 0 735 051
- JP-A- 6 087 932
- JP-A- 6 248 017
- JP-A- 2002 146 038
- US-A- 5 442 041
- US-A- 5 444 041
- US-A1- 2002 052 456

## Description

### Technical Field

The present invention relates to a method for preparing copolymers of styrene and maleimide. More particularly, the present invention relates to a method for preparing copolymers of styrene and maleimide by imidization of copolymers of styrene and maleic anhydride using a supercritical fluid.

### Background Art

In general, in order to improve heat resistance, thermal stability and processability of copolymers of styrene and maleimide, it is necessary to control maleimide content in the copolymers. However, it is difficult to control maleimide content of the said copolymers by polymerization methods known in the art up to now.

Meanwhile, it is possible to control maleic anhydride content in copolymers of styrene and maleic anhydride. Therefore, copolymers of styrene and maleimide having controlled maleimide content can be obtained by using a method for imidization of maleic anhydride in copolymers of styrene and maleic anhydride. A reactive extrusion method is known in the art for imidizing copolymers of styrene and maleic anhydride, continuously and economically, by adding an imidizing agent to the copolymers of styrene and maleic anhydride without using an organic solvent.

However, such conventional reactive extrusion method performs imidization at a high temperature, and thus have disadvantages that thermal decomposition of the copolymers may occur during the imidization and optical properties of copolymers of styrene and maleimide produced by the methods may be deteriorated. Also, such conventional methods have an additional disadvantage that an imidizing agent introduced to perform the imidization is present in a gas state inside of a high-temperature extruder, so that it is not mixed with high-viscosity copolymers of styrene and maleic anhydride uniformly, thereby causing local imidization and reducing the imidization ratio.

Japanese Laid-Open Patent No. Hei 6-56921 discloses a method for imidization of copolymers of styrene and maleic anhydride in an extruder, comprising the steps of: providing maleic anhydride copolymers and introducing amines to the copolymers in a high-temperature and high-pressure blending zone in order to perform imidization; and removing side-products and unreacted materials having a low molecular weight under a reduced pressure. Although copolymers of styrene and maleimide obtained by the said method have excellent heat resistance and high-temperature stability, the copolymers are liable to be colored and to experience reverse imidization because they are formed at a high temperature.

European Laid-Open Patent No. 0 728 767 discloses a method for imidization of copolymers of styrene and maleic anhydride in an extruder. The method suggests use of a catalyst for reducing a processing temperature so as to overcome the above-mentioned problem in the method disclosed in Japanese Laid-Open Patent No. Hei 6-56921. However, copolymers of styrene and maleimide obtained by the method contain the catalyst, which adversely affects properties of the copolymers.

Vermeesch, et al., suggested a method for preparing copolymers of styrene and maleimide from copolymers of styrene and maleic anhydride in twin screw extruder by one step introducing an alkylamine into the extruder with no catalyst and solvent. According to the said method, as the number of alkyl groups increases, glass transition temperature of styrene-maleimide copolymer decreases. From this, it can be seen that thermal properties of styrene-maleimide copolymers obtained by the said method depend on the imidizing agent used therein. See J. Appl. Poly. Sci. 53, 1365 (1994).

Meanwhile, a supercritical fluid is a fluid that causes a great amount of change in its properties continuously from the gas state to the liquid state, when the pressure is slightly changed near the critical point, and has properties of both a liquid and a gas. Recently, supercritical fluids have been applying to various technologies, including polymerization of polymers, introduction of functional groups into polymers, extraction and blending.

For example, as a method of chemical modification of polymers using supercritical fluids, there is a method for chemical imidization of a Langmuir-Blodgett (LB) film comprising polyamic acid n-octadecyl amine salt with a mixture of acetic anhydride and pyridine, in the presence of supercritical carbon dioxide as a solvent, instead of an organic solvent. The said method was reported that it significantly reduced the reaction time and facilitated the removal of reactants from a reactor, compared to a conventional imidization method using benzene as a solvent. See Colloids and Surfaces A. 198-200, 527 (2002).

However, the above-mentioned supercritical fluid technology is applied to a batch reactor, and thus it is not effective with regard to productivity and cost. Until now, supercritical fluids have never been used for a method for imidization of copolymers of styrene and maleic anhydride in a continuous-mode extruder.

### Disclosure of the Invention

We have found that when an imidizing agent in a supercritical state, an imidizing agent with supercritical carbon dioxide, or an imidizing agent in a supercritical state with supercritical carbon dioxide is/are used in a process for preparing copolymers of styrene and maleimide by imidization of copolymers of styrene and maleic anhydride, it is possible to reduce a viscosity in a blending step compared to a reactive extrusion method for imidizing copolymers of styrene and maleic anhydride. By virtue of the said viscosity reduction, it is possible to perform extrusion without any load applied to an extruder even at a relatively low temperature, thereby preventing thermal decomposition of polymers caused by heats generated from a blending step performed at a high temperature or at a high viscosity. Additionally, we have found that an imidizing agent in a gas state tends to occupy the upper part of an extruder barrel, so that it is hardly blended with styrene and maleic anhydride having a high viscosity. On the other hand, imidizing agent in a supercritical state is blended well with styrene and maleic anhydride as a whole, and thus imidization may occur uniformly and sufficiently. Also, due to the low viscosity, imidizing agent or carbon dioxide residues and by-products diffuse from copolymers of styrene and maleimide at a high speed so as to remove them with ease, and thus it is possible to produce copolymers of styrene and maleimide having excellent optical properties, thermal properties and mechanical properties. The present invention is based on these findings.

Therefore, it is an object of the present invention to provide a method for imidization-extrusion of copolymers of styrene and maleic anhydride using a supercritical fluid.

According to an aspect of the present invention, there is provided a method for imidization-extrusion of copolymers of styrene and maleic anhydride, comprising the steps of: (1) blending copolymers of styrene and maleic anhydride with an imidizing agent in a supercritical state; and (2) removing residual amines and by-products. By virtue of the method, copolymers of styrene and maleimide can be prepared.

Copolymers of styrene and maleic anhydride that may be used in the present invention are represented by the following structural formula 1:

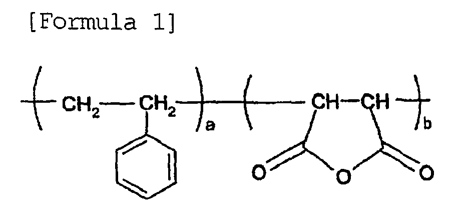

Copolymers of styrene and maleimide that may be prepared by the method of the present invention are represented by the following structural formula 2:

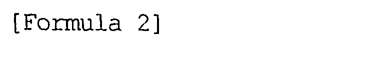

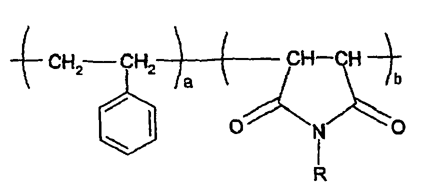

The temperature and the pressure at which point an imidizing agent transforms into a supercritical state vary according to the kind of the imdizing agent. Particularly, it is difficult to transform an imidizing agent having a high melting point into a supercritical state. Therefore, when it is not possible to transform an imidizing agent into a supercritical state, or when residual amines remained after reaction are not removed efficiently, supercritical carbon dioxide may be utilized. When an imidizing agent is blended with copolymers of styrene and maleic anhydride, supercritical carbon dioxide (Tc=31.05°C, Pc=1070.4 psi) is blended with them, so that imidization of copolymers of styrene and maleic anhydride may be performed uniformly at a low viscosity and a low temperature, and residual amines and by-products may be removed efficiently.

Therefore, according to another aspect of the present invention, there is provided a method for imidization-extrusion of copolymers of styrene and maleic anhydride, comprising the steps of: (1) blending copolymers of styrene and maleic anhydride with an imidizing agent and supercritical carbon dioxide; and (2) removing residual amines and by-products.

Further, according to still another aspect of the present invention, there is provided a method for imidization-extrusion of copolymers of styrene and maleic anhydride, comprising the steps of: (1) blending copolymers of styrene and maleic anhydride with an imidizing agent in a supercritical state and supercritical carbon dioxide; and (2) removing residual amines and by-products.

In the method of the present invention, the said imidizing agent in a supercritical state may be prepared by injecting an imidizing agent into a blending zone having conditions under which the imidizing agent can be transformed into a supercritical state. Also, supercritical carbon dioxide may be prepared by injecting carbon dioxide into a blending zone having conditions under which carbon dioxide can be transformed into a supercritical state.

Compared to a batch process using a closed system, an extrusion process using an open system must have a pressurizing zone, in which molten resins form a barrier inhibiting the transfer of reactants and pressurization is performed under a pressure greater than the supercritical pressure of the imidizing agent or that of carbon dioxide, so that the imidizing agent or carbon dioxide may be used in a supercritical state. The pressurizing method may include selection of adequate screw combinations or barrel designs, and increasing viscosity of molten resins.

The imidizing agent may be injected into a blending zone by using a high-pressure syringe pump, wherein the injection is preferably performed under a pressure of 700-2,000 psi. Additionally, the amount of the imidizing agent is preferably 0.8-2 moles per mol of maleic anhydride in copolymers of styrene and maleic anhydride. In order to facilitate the blending of the imidizing agent in a supercritical state with copolymer charges, screw combination may be disposed in a position at which point the imidizing agent is injected.

When an imidizing agent cannot transform into a supercritical fluid in itself, carbon dioxide may be injected into an extruder by using a high-pressure syringe pump. In this case, carbon dioxide is preferably injected under a pressure ranged from 2,000 psi to 7,000 psi, and the amount of carbon dioxide is preferably 12-30 wt% based on the weight of copolymers of styrene and maleic anhydride injected to the extruder. Screw combination disposed in the position at which point carbon dioxide is injected cause carbon dioxide to act as a supercritical medium, and facilitate the blending of copolymer charges with the imidizing agent.

If the temperature in the blending zone is so low as to provide an excessively high viscosity of copolymer charges, the imidizing agent in a supercritical state or supercritical carbon dioxide cannot be blended well with copolymer charges, imidization reaction cannot be performed uniformly, and thus imidization efficiency decreases, even though the blending zone has conditions under which the imidizing agent or carbon dioxide transforms into a supercritical state. On the other hand, if the temperature in the blending zone is too high, thermal decomposition of copolymer charges and reverse imidization may be generated, and thus imidization efficiency decreases. Preferably, the temperature in the blending zone ranges from 150°C to 320°C.

The pressure in the blending zone has to be controlled so that an imidizing agent or carbon dioxide may be present in a supercritical state. When an imidizing agent in a supercritical state is used, the pressure in the blending zone is preferably 700 psi or more. When supercritical carbon dioxide is used, the pressure in the blending zone is preferably 1100 psi or more. Additionally, when an excessive amount of carbon dioxide is introduced into the blending zone, it is difficult to remove residual carbon dioxide completely in the step for removing by-products, and thus a part of residual carbon dioxide, which is not completely removed, remains in an extruded strand to form a vacant space. Therefore, the pressure in the blending zone is preferably 2,000 psi or less.

According to the present invention, because retention time of resins in an extruder is short, it is preferable that the temperature is increased to the maximum temperature of 300 °C or higher, after passing out of the blending zone, for the purpose of causing complete and prompt imidization of materials which are not imidized and present in an amide intermediate stage.

The blending step for imidizing copolymers of styrene and maleic anhydride in an extruder by using a supercritical fluid is preferably performed under a shear rate ranged from 10 rpm to 600 rpm. If the shear rate is too low, poor blending and poor imidization may occur, and a pressure in the blending zone is not sufficiently increased and thus the imidizing agent or carbon dioxide may not transform into a supercritical state. If the shear rate is too high, local shear heat-emission may generate in the blending zone and thus the molecular weight of the copolymers may decrease. Additionally, retention time of raw materials in the extruder may become short and thus imidization cannot occur sufficiently.

According to the present invention, retention time of raw materials in the extruder preferably ranges from 30 seconds to 10 minutes. If the retention time is too short, it is difficult to perform imidization. On the other hand, if the retention time is too long, copolymers may oxidize and decompose at a high temperature, thereby reducing the molecular weight and production efficiency.

After passing out of the blending zone of the extruder, in which imidization is accomplished, residual amines and by-products are removed. These by-products may generate discoloration of resins and adversely affect the surface of a molded product. The said removing step can be carried out by using a depressurization device. More particularly, a vent to which a depressurization device is attached may be used to remove residual amines and by-products.

In the method of the present invention, a step for adding a dehydration catalyst may be performed after step (1) as described above so as to perform chemical imidization at a low temperature. However, when a dehydration catalyst is used, this catalyst must be removed in the depressurization step. Dehydration catalysts that may be used include mixtures of acetic anhydride and trialkylamine.

The method according to the present invention may be performed in a single screw extruder or a twin screw extruder.

Preferably, copolymers of styrene and maleic anhydride used as an imide precursor in step (1) comprise 5-50 wt% of maleic anhydride monomer and 95-50 wt% of styrene monomer.

In order to obtain a supercritical state in an extruder, it is preferable that molten resins protect the imidizing agent or carbon dioxide from escaping from the front part or the rear part of the reaction zone. Particularly, if the molecular weight of the imide precursor is too low, the imidizing agent or carbon dioxide may escape, because the viscosity of resins is too low. In this case, even though imidization may occur, the resultant copolymers have a low molecular weight and poor mechanical properties. On the other hand, if the molecular weight of the imide precursor is too high, the imide precursor may not be blended well with the imidizing agent, because it has a high viscosity. Also, the imide precursor is difficult to be processed due to a heavy load on the extruder. Additionally, it is preferable that the imide precursor has an adequate molecular weight distribution so that products having excellent mechanical properties may be obtained, and that glass transition temperature is determined by considering application range of a wide range of resins. Preferably, the imide precursor, i.e., copolymers of styrene and maleic anhydride has a weight average molecular weight of 5,000 to 300,000, a molecular weight distribution (ratio of a weight average molecular weight/a number average molecular weight) of 2.0-4.0, and a glass transition temperature of 110-160 °C.

These copolymers of styrene and maleic anhydride may be present in a powder, flake or pellet state.

The imidizing agent used in step (1) is a compound, which is reactive to an acid anhydride moiety of maleic anhydride, thereby transforming the anhydride moiety into an imide bond. Ammonia or primary amines may be used as an imidizing agent. Primary amines include aliphatic primary amines and primary amines having aromatic groups.

The particular examples for aliphatic primary amines may include a C1-C18 alkyl amine or alkene amine such as methylamine, ethylamine, etheneamine, allylamine, n-propylamine, isopropylamine, n-butylamine, isobutylamine, sec-butylamine, t-butylamine, pentylamine, hexylamine, 2-ethylhexylamine, cyclohexylamine, hepthylamine, octylamine, nonylamine, decylamine, dodecylamine, hexadecylamine and stearylamine; a (C1-C4)alkoxy(C1-C4)alkylamine such as methoxypropyl amine, ethoxypropyl amine, methoxybutyl amine and ethoxybutyl amine, or the like.

Additionally, primary amines having aromatic groups may include an aniline derivative, a naphthyl amine derivative, a benzyl amine derivative, or the like. For example, o-ethyl aniline, p-ethyl aniline, m-ethyl aniline, o-propyl aniline, p-propyl aniline, m-propyl aniline, o-isopropyl aniline, p-isopropyl aniline, m-isopropyl aniline, o-n-butyl aniline, p-n-butyl aniline, m-n-butyl aniline, o-isobutyl aniline, p-isobutyl aniline, m-isobutyl aniline, o-t-butyl aniline, p-t-butyl aniline, m-t-butyl aniline, o-pentyl aniline, p-pentyl aniline, m-pentyl aniline, o-isopentyl aniline, p-isopentyl aniline, m-isopentyl aniline, o-s-pentyl aniline, p-s-pentyl aniline, m-s-pentyl aniline, o-t-pentyl aniline, p-t-pentyl aniline, m-t-pentyl aniline, 2,4-xylidine, 2,6-xylidine, 2,3-xylidine, 2-methyl-4-t-butyl aniline, 2,4-di-t-butyl aniline, 2,4,6-trimethyl aniline, 2,4,5-trimethyl aniline, 2,3,4-trimethyl aniline, 2,6-dimethyl-4-t-butyl aniine, 2,4,6-tri-t-butylaniline; a halogen aniline, such as o-chloroaniline, p-chloroaniline, m-chloroaniline, o-bromoaniline, p-bromoaniline, m-bromoaniline, o-fluoroaniline, p-fluoroaniline, m-fluoroaniline, 2,4-dichloroaniline, 2,6-dichloroaniline, 2,3-dichloroaniline, 2,4-dibromoaniline, 2,6-dibromoaniline, 2,3-dibromoaniline, 2,4-difluoroaniine, 2,6-difluoroaniline, 2,3-difluoroaniline, 2,4,6-trichloroaniline, 2,4,5-trichloroaniline, 2,3,4-trichloroaniline, 2,4,6-tribromoaniline, 2,4,5-tribromoaniline; 2,3,4-tribromoaniline, 2,4,6-trifluoroaniline, 2,4,5-trifluoroaniline, 2,3,4-trifluoroaniline, etc.; o-toluidine, p-touidine, m-toluidine, 4-nitro-2-toluidine, o-methoxyaniline, p-methoxyaniline, m-methoxyaniline, o-ethoxyaniline, p-ethoxyaniline, methoxyaniline, o-propoxyaniline, p-propoxyaniline, m-propoxyaniline, alpha-naphthyl amine, beta-naphthyl amine, o-biphenyl amine, p-biphenyl amine, m-biphenyl amine, 4-ethoxyanilne phenylethyl amine, o-methylbenzyl amine, p-methylbenzyl amine, m-methylbenzyl amine, p-chlorobenzyl amine, dimethoxyphenylethyl amine, glycine, 3-aminoacetophenone, 2-aminoanthraquinone, p-aminobenzoic acid, 2-amino-4,6-dimethylpyridine, 3-aminophthalimide, 2-aminopyrimidine, 2-aminopyridine, 2-aminothiazole, 5-aminotetrazole, alanine, etc. may be used.

### Best Mode for Carrying Out the Invention

Reference will now be made in detail to the preferred embodiments of the present invention. It is to be understood that the following examples are illustrative only and the present invention is not limited thereto.

### EXAMPLE 1

Styrene/maleic anhydride copolymer having a weight average molecular weight of 180,000, maleic anhydride content of 14 wt%, a molecular weight distribution of 2.5 and a glass transition temperature (Tg) of 135°C was continuously supplied to a feeding inlet of a co-rotating intermeshing twin screw extruder at the rate of 2 kg/h. Then, isopropyl amine as an imidizing agent was introduced into a barrel inlet of a blending zone in a ratio of 1.2 moles per mole of maleic anhydride. Screws were combined so as to set the barrel temperature and pressure in the blending zone to 220°C and 800 psi, respectively, so that isopropyl amine may be present in a supercritical state (Tc= 199°C, Tp= 659 psi) in the blending zone. Additionally, the temperature in a zone next to the blending zone was increased to 300°C in order to complete thermal imidization. Further, unreacted isopropyl amine, moistures produced from the imidization and other by-products having a low molecular weight were removed from a vent of the barrel equipped with a depressurization device. Screw rotation speed was 250 rpm. Molten resins were extruded from a nozzle in the form of a strand, cooled in a water bath, cut by a cutter and then pelletized. Quantitative elemental analysis of the resultant styrene/maleimide copolymer showed that the imidization ratio was 95%. Properties of the imide copolymer were determined as described hereinafter.

Thermal decomposition temperature was measured by using a TGA (Thermogravimetric Analysis). Thermal decomposition temperature of a sample was defined as the temperature at which point the weight of the sample was 90% of the initial weight of the sample, when the sample was heated at a rate of 10°C/min. under nitrogen atmosphere.

Tensile strength was measured by injection-molding a No.1 type sample according to the tensile strength test under KS M 3006. Five samples were made for performing one experiment, and five measured values were averaged.

IZOD impact strength was measured according to the ASTM D 256 method, wherein five samples were made for performing one experiment, and five measured values were averaged.

Light transmittance was measured on a press-molded sample having a thickness of 3 mm by using an UV spectrometric analyzer at 630 nm. The results are shown in Table 1.

### EXAMPLE 2

Styrene/maleic anhydride copolymer having a weight average molecular weight of 180,000, maleic anhydride content of 14 wt%, a molecular weight distribution of 2.5 and a glass transition temperature (Tg) of 135°C was continuously supplied to a feeding inlet of a co-directional intermeshing twin screw extruder at the rate of 2 kg/h. Then, aniline as an imidizing agent was introduced into an barrel inlet of a blending zone in a ratio of 1.2 moles per mole of maleic anhydride. Screws were combined so as to set the barrel temperature and pressure in the blending zone to 200°C and 1300 psi, respectively. Then, carbon dioxide was continuously introduced into a barrel inlet of the blending zone simultaneously with introducing aniline. Particularly, dispensing pressure of a pump for introducing aniline was 1200 psi, and carbon dioxide was introduced by using a syringe pump under 4,000 psi in the amount of 15 wt% of the resin. Screw rotation speed was 250 rpm. Additionally, the temperature in a zone next to the blending zone was increased to 300°C in order to perform thermal imidization as completely as possible. Further, unreacted aniline, moistures produced from the imidization and other by-products having a low molecular weight were removed from a vent of the barrel equipped with a depressurization device. Molten resins were extruded from a nozzle in the form of a strand, cooled in a water bath, cut by a cutter and then pelletized. Quantitative elemental analysis of the resultant styrene/maleimide copolymer showed that the imidization ratio was 96%. Properties of the imide copolymer are shown in Table 1.

### Example 3

Example 2 was repeated to obtain styrene/maleimide copolymer, except that styrene/maleic anhydride having a weight average molecular weight of 180,000 and maleic anhydride content of 30 wt%. The imidization ratio was 95%. Properties of the imide copolymer are shown in Table 1.

### Example 4

Example 3 was repeated to obtain styrene/maleimide copolymer, except that cycloamine was used as an imidizing agent. The imidization ratio was 97%. Properties of the imide copolymer are shown in Table 1.

### Comparative Example 1

Example 1 was repeated to obtain styrene/maleimide copolymer, except that screw combinations in the blending zone were modified to set a pressure to 500 psi or less so that isoprene amine might not exist in a supercritical state in the blending zone. The imidization ratio was 89%.

### Comparative Example 2

Example 2 was repeated to obtain styrene/maleimide copolymer, except that supercritical carbon dioxide was not used and the temperature in the blending zone was changed to 240°C. The imidization ratio was 92%. Properties of the imide copolymer are shown in Table 1.

### Comparative Example 3

Example 3 was repeated to obtain styrene/maleimide copolymer, except that supercritical carbon dioxide was not used and the temperature in the blending zone was changed to 240°C. The imidization ratio was 91%. Properties of the imide copolymer are shown in Table 1.

### Comparative Example 4

Example 4 was repeated to obtain styrene/maleimide copolymer, except that supercritical carbon dioxide was not used and the temperature in the blending zone was changed to 240°C. The imidization ratio was 90%. Properties of the imide copolymer are shown in Table 1.

**[Table 1]**

| | Example | | | | Comparative Example | | | |
|---|---|---|---|---|---|---|---|---|
| | 1 | 2 | 3 | 4 | 1 | 2 | 3 | 4 |
| Imidization ratio ¹⁾ | 95 | 96 | 95 | 97 | 89 | 92 | 91 | 90 |
| Molecular weight(x 10³) ²⁾ | 17.2 | 17.4 | 16.9 | 17.3 | 17.4 | 17.2 | 16.6 | 17.0 |
| Molecular weight distribution ²⁾ | 2.7 | 2.8 | 3.0 | 2.7 | 2.9 | 3.1 | 3.2 | 3.1 |
| Glass transition temperature (°C) | 130 | 155 | 160 | 162 | 126 | 150 | 155 | 156 |
| Thermal decomposition temperature (°C) ³⁾ | 370 | 390 | 397 | 396 | 350 | 377 | 393 | 392 |
| Tensile strength (Kg/cm²) | 500 | 486 | 480 | 450 | 490 | 483 | 474 | 442 |
| IZOD impact strength (Kg-cm/cm) | 7.9 | 7.5 | 7.1 | 6.5 | 7.1 | 6.8 | 6.3 | 5.9 |
| Light transmittance ⁴⁾ | 92 | 91 | 89 | 90 | 84 | 82 | 80 | 86 |
| ¹⁾ Measured by IR spectrophotometer. | | | | | | | | |
| ²⁾ Polystyrene standard sample was used. Measured by Gel Permeation Chromatography. | | | | | | | | |
| ³⁾ Temperature at which point 90% of a sample is present. | | | | | | | | |
| ⁴⁾ Press molded sample having a thickness of 3 mm was used. Measured at 630 nm. | | | | | | | | |

As shown in Table 1, copolymers of styrene and maleimide obtained by using an imidizing agent in a supercritical state or supercritical carbon dioxide according to the present invention showed an improved imidization ratio and provided excellent properties including an increased light transmittance, compared to copolymers of styrene and maleimide according to Comparative Examples. Additionally, when a supercritical fluid was not used, viscosity of copolymer charges was too high in a blending zone, and thus compatibility of copolymer charges with an imidizing agent was poor and imidization could not occur uniformly.

### Industrial Applicability

As can be seen from the foregoing, the method for imidization-extrusion of copolymers of styrene and maleic anhydride using a supercritical fluid according to the present invention performs extrusion at a lower temperature compared to a conventional method for imidization-extrusion of copolymers of styrene and maleic anhydride. Therefore, the method according to the present invention can prevent thermal decomposition of polymers, perform imidization uniformly, prevent reverse imidization and remove residual amines and by-products with ease, and thus can provide copolymers of styrene and maleimide having excellent optical properties, thermal properties and mechanical properties.

While this invention has been described in connection with what is presently considered to be the most practical and preferred embodiment, it is to be understood that the invention is not limited to the disclosed embodiment, but, on the contrary, it is intended to cover various modifications and variations within the spirit and scope of the appended claims.

## Claims

1. A method for preparing copolymers of styrene and maleimide, comprising the steps of:
(i) blending copolymers of styrene and maleic anhydride with an imidizing agent in a supercritical state; and
(ii) removing residual amines and by-products.

2. A method for preparing copolymers of styrene and maleimide, comprising the steps of:
(i) blending copolymers of styrene and maleic anhydride with an imidizing agent and supercritical carbon dioxide; and
(ii) removing residual amines and by-products.

3. A method for preparing copolymers of styrene and maleimide, comprising the steps of:
(i) blending copolymers of styrene and maleic anhydride with an imidizing agent in a supercritical state and supercritical carbon dioxide; and
(ii) removing residual amines and by-products.

4. The method according to any one of claims 1 to 3, wherein the copolymers of styrene and maleic anhydride used in step (i) comprise 5-50 wt% of maleic anhydride monomer and 95-50 wt% of styrene monomer, and have a weight average molecular weight of 5,000 to 300,000.

5. The method according to any one of claims 1 to 3, wherein the imidizing agent is ammonia or primary amines.

6. The method according to claims 1 or 3, wherein the imidizing agent in a supercritical state is obtained by introducing the imidizing agent into a blending zone having conditions under which the imidizing agent transforms into a supercritical state, in step (i).

7. The method according to claim 6, wherein the imidizing agent is introduced under a pressure of 700 psi to 2,000 psi.

8. The method according to claim 2 or 3, wherein the supercritical carbon dioxide is obtained by introducing carbon dioxide into a blending zone having conditions under which carbon dioxide transforms into a supercritical state, in step (i).

9. The method according to claim 8, wherein carbon dioxide is introduced under a pressure ranged from 2,000 psi to 7,000 psi.

10. The method according to any one of claims 1 to 3, wherein the imidizing agent is used in the amount of 0.8 to 2 moles per mole of maleic anhydride in the copolymers of styrene and maleic anhydride, in step (i).

11. The method according to any one of claims 1 to 3, wherein the pressure in the blending zone is 700 psi to 2,000 psi and the temperature in the blending zone is 150°C to 320°C, in step (i).

12. The method according to any one of claims 1 to 3, wherein the temperature is set to 300°C to 320°C after carrying out step (i).

13. The method according to any one of claims 1 to 3, wherein step (ii) is carried out by using a depressurization device.

## Patentansprüche

1. Verfahren zur Herstellung von Copolymeren aus Styrol und Maleinimid mit folgenden Schritten:
(i) Copolymere aus Styrol und Maleinsäureanhydrid werden mit einem imidbildenden Mittel in überkritischem Zustand vermischt und
(ii) restliche Amine und Nebenprodukte werden entfernt.

2. Verfahren zur Herstellung von Copolymeren aus Styrol und Maleinimid mit folgenden Schritten:
(i) Copolymere aus Styrol und Maleinsäureanhydrid werden mit einem imidbildenden Mittel und überkritischem Kohlendioxid vermischt und
(ii) restliche Amine und Nebenprodukte werden entfernt.

3. Verfahren zur Herstellung von Copolymeren aus Styrol und Maleinimid mit folgenden Schritten:
(i) Copolymere aus Styrol und Maleinsäureanhydrid werden mit einem imidbildenden Mittel in überkritischem Zustand und mit überkritischem Kohlendioxid vermischt und
(ii) restliche Amine und Nebenprodukte werden entfernt.

4. Verfahren nach einem der Ansprüche 1 bis 3, bei dem die in Schritt (i) verwendeten Copolymere aus Styrol und Maleinsäureanhydrid 5 bis 50 Gew.-% Maleinsäureanhydrid-Monomer und 95 bis 50 Gew.-% Styrolmonomer umfassen und ein durchschnittliches Molekulargewicht (w/w) von 5.000 bis 300.000 aufweisen.

5. Verfahren nach einem der Ansprüche 1 bis 3, bei dem das imidbildende Mittel Ammoniak oder primäre Amine ist.

6. Verfahren nach Anspruch 1 oder Anspruch 3, bei dem das imidbildende Mittel in einem überkritischen Zustand in Schritt (i) erhalten wird durch Einführen des imidbildenden Mittels in eine Mischzone, die Bedingungen aufweist, unter denen das imidbildende Mittel in einen überkritischen Zustand übergeht.

7. Verfahren nach Anspruch 6, bei dem das imidbildende Mittel unter einem Druck von 700 bis 2.000 psi eingeführt wird.

8. Verfahren nach Anspruch 2 oder Anspruch 3, bei dem das überkritische Kohlendioxid in Schritt (i) erhalten wird durch Einführen von Kohlendioxid in eine Mischzone, die Bedingungen aufweist, unter denen Kohlendioxid in einen überkritischen Zustand übergeht.

9. Verfahren nach Anspruch 8, bei dem Kohlendioxid unter einem Druck von 2.000 bis 7.000 psi eingeführt wird.

10. Verfahren nach einem der Ansprüche 1 bis 3, bei dem das imidbildende Mittel in Schritt (i) in einer Menge von 0,8 bis 2 Mol je Mol Maleinsäureanhydrid in den Copolymeren aus Styrol und Maleinsäureanhydrid verwendet wird.

11. Verfahren nach einem der Ansprüche 1 bis 3, bei dem in Schritt (i) der Druck in der Mischzone 700 bis 2.000 psi und die Temperatur in der Mischzone 150 bis 320° C betragen.

12. Verfahren nach einem der Ansprüche 1 bis 3, bei dem die Temperatur nach Durchführung des Schrittes (i) auf 300 bis 320° C eingestellt wird.

13. Verfahren nach einem der Ansprüche 1 bis 3, bei dem Schritt (ii) unter Verwendung einer entspannenden Vorrichtung durchgeführt wird.

## Revendications

1. Procédé de préparation de copolymères de styrène et maléimide, comprenant les étapes suivantes :
(i) on mélange des copolymères de styrène et d'anhydride maléique à un agent imidisant dans un état supercritique et
(ii) on enlève les amines résiduels et sous-produits.

2. Procédé de préparation de copolymères de styrène et maléimide, comprenant les étapes suivantes :
(i) on mélange des copolymères de styrène et d'anhydride maléique à un agent imidisant et au dioxyde de carbone supercritique et
(ii) on enlève les amines résiduels et sous-produits.

3. Procédé de préparation de copolymères de styrène et maléimide, comprenant les étapes suivantes :
(i) on mélange des copolymères de styrène et d'anhydride maléique à un agent imidisant dans un état supercritique et au dioxyde de carbone supercritique et
(ii) on enlève les amines résiduels et sous-produits.

4. Procédé selon l'une des revendications 1 à 3, dans lequel les copolymères de styrène et d'anhydride maléique utilisés à l'étape (i) comprennent de 5 à 50 % en poids de monomère d'anhydride maléique et 95 à 50 % en poids de monomère de styrène et présentent un poids moléculaire moyen en poids de 5.000 à 300.000.

5. Procédé selon l'une des revendications 1 à 3, dans lequel l'agent imidisant est de l'ammoniaque ou des amines primaires.

6. Procédé selon la revendication 1 ou la revendication 3, dans lequel l'agent imidisant dans un état supercritique est obtenu dans l'étape (i) en introduisant l'agent imidisant dans une zone de mélange qui présente des conditions sous lesquelles l'agent imidisant passe à un état supercritique.

7. Procédé selon la revendication 6, dans lequel l'agent imidisant est introduit sous une pression de 700 à 2.000 psi.

8. Procédé selon la revendication 2 ou la revendication 3, dans lequel le dioxyde de carbone supercritique est obtenu dans l'étape (i) en introduisant du dioxyde de carbone dans une zone de mélange qui présente des conditions sous lesquelles le dioxyde de carbone passe à un état supercritique.

9. Procédé selon la revendication 8, dans lequel le dioxyde de carbone est introduit sous une pression de 2.000 à 7.000 psi.

10. Procédé selon l'une des revendications 1 à 3, dans lequel l'agent imidisant est utilisé dans l'étape (i) dans une quantité de 0,8 à 2 moles par mole d'anhydride maléique dans les copolymères de styrène et d'anhydride maléique.

11. Procédé selon l'une des revendications 1 à 3, dans lequel à l'étape (i), la pression dans la zone de mélange est de 700 à 2.000 psi et la température dans la zone de mélange est de 150 à 320°C.

12. Procédé selon l'une des revendications 1 à 3, dans lequel après avoir mis en oeuvre l'étape (i), la température est réglée de 300°C à 320°C.

13. Procédé selon l'une des revendications 1 à 3, dans lequel l'étape (ii) est mise en oeuvre en utilisant un dispositif de dépressurisation.
